# EUROPEAN PATENT SPECIFICATION

(11) **EP 1 495 925 B1**
(45) Date of publication and mention of the grant of the patent: **21.05.2008**
(21) Application number: 03015870.3
(22) Date of filing: 11.07.2003
(51) Int. Cl.: B60R 22/185, B60R 22/24, B60R 22/28

(54) **A safety belt relinker arrangement**
Sischerheitsgurtumlenkanordnung
Dispositif d'un renvoi de sangle pour ceinture de sécurité

(43) Date of publication of application: 12.01.2005
(73) Proprietor: Ford Global Technologies, Inc., Dearborn, MI 48126 (US)
(72) Inventor: Sandahl, Andreas, 41674 Göteborg (SE); Forsell, Jonas, 41256 Göteborg (SE); Adolfsson, Peter, 42244 Hisings Backa (SE); Persson, Jörgen, 41322 Göteborg (SE)
(74) Representative: Spitmann, Knut Hermann

(56) References cited:
- EP-A- 1 262 383
- DE-A- 2 414 952
- US-A- 3 561 690
- US-A- 3 862 673
- US-A- 4 974 876
- US-A- 5 160 167
- US-A- 5 704 645

## Description

### TECHNICAL AREA

The present invention relates to an arrangement for relinking and clamping a seat belt in a vehicle, the relinker arrangement comprising a relinker and a load limiter, wherein the load limiter connects the relinker to the vehicle.

### BACKGROUND OF THE INVENTION

In conventional vehicles, in the front seat the seat belts are rolled into and out of belt rolls which are generally mounted at the so-called B-pillars, i.e. at the interior side panels of the vehicle located between the front and the rear seats. In the rear seat, the belt rolls are mounted at the C-pillars in SUVs and estates, and into the hat rack in sedans. The drawback of having the belt rolls located at the upper part of the B-pillar is the impaired sight backwards since the belt roll arrangement usually requires a lot of space due to inherent functionalities. Consequently, it is appropriate to attach the belt roll in another location, for instance at the lower part of the B-pillar or adjacent thereof. Then it is appropriate to arrange a relinker arrangement at the upper part of the B-pillar for relinking the seat belt toward the user.

In the present day situation, the forces of the seat belt are generally controlled by some of the functionalities located inside the belt roll. In regular use, the seat belt is stretched by a spring arrangement so that the seat beat lies tightened around the chest of a user thereof. The spring arrangement also provides that the seat belt buckle is located near the B-pillar when the driver or the passenger doesn't use the seat belt. Furthermore, a web acceleration lock device clamps the seat belt when it is rapidly and violently pulled out of the belt roll, whereupon the web acceleration lock device doesn't allow any further unrolling of the seat belt out of the belt roll.

At a traffic incident or accident, the seat belt can also be pretensioned by a pretension functionality, which then is activated. The so-called pretensioner is generally located inside the belt roll arrangement, and is generally triggered by a pyrotechnical device, whereupon the seat belt is tightened and the belt roll is locked. The seat belt is subsequently released when the belt forces are sufficiently high.

Relinker arrangements for relinking and clamping the seat belt in form of so-called self-braking, irreversible D-rings are previously well known. However, some of these D-rings doesn't provide any control of the belt forces at traffic incidents and accidents, and consequently, the belt forces can be considerable.

In prior art, there do however exist arrangements for decreasing and controlling the belt forces at the time of the accident, which is preferred since the chest of a human can be severely damaged due to the seat belt forces. GB 2 075 333 shows a seat belt arrangement having a relinker, which is attached to the vehicle. The relinker is released from the vehicle and accompanies the seat belt when the belt forces are sufficiently great. FR 2 188 451 shows an additional relinker arrangement wherein the relinker clamps the seat belt by means of an electrical mechanism, whereupon a load limiting function by means of a number of slots in a deformable area in the interior wall of the vehicle limits the belt forces. However, in this case the load limiting capacity is very restricted, i.e. this arrangement operates more like an overload protection. DE 24 14 952 shows a further type of relinker arrangement for the seat belt wherein a pull rope is arranged in connection with the relinker. The pull rope is arranged between three strippers so that the strippers block the pull rope until a sufficiently great force is applied.

US 5,704,645 reveals an occupant restraint system for a vehicle having an energy absorbing device, which is attached to a vehicle pillar and a seat belt. Wen a predetermined load is placed on the seat belt, the energy absorbing device is activated to reduce the peak load. The energy absorbing device includes a spool rotatably mounted to the pillar, a wire member attached at one end of the spool, wound around the spool, and at another end attached to the seat belt. A loop member is mounted adjacent the roof and receives the seat belt in slidable connection therewith. The spool is provided with tear resistant media such that said wire cuts through said media when unwinding from the spool when a predetermined load is applied to said second end of said wire.

US 5,160,167 reveals a conventional self locking strap guide for a seat belt which is intended to be fixed to a vehicle. When a vehicle is subjected to an abrupt deceleration such as e.g. which occurs in the event of a violent impact of longitudinal component, all the kinetic energy of the occupant is absorbed by the seat belt so as to hold him back in his seat and prevent him from being thrown forwards.

### SUMMARY OF THE INVENTION

It is therefore an object to provide a relinker arrangement for providing a control of the forces in the seat belt, normally operating in a regular driving situation but providing a control of the seat belt forces in traffic incidents and accidents.
In particular, it is an object to provide a controlled energy absorbing and receiving capacity of the seat belt arrangement so that the seat belt forces don't exceed a desired ideal characteristic, e.g. the maximum possible load for a chest or another part of a human or mammal body. More particularly, it is an object to provide a maximum energy absorbtion ability for the maximum available compartment space, i.e. for the distance the seat belt user travels toward the front seat, the dashboard or the windshield when accompanying the seat belt unrolling out of the belt roll, after the pretension after the accident, without hitting the front seat, the dashboard or the windshield.
These objects are preferred in driving situations such as retardation of the vehicle speed in so-called ride-downs at traffic incidents and accidents.

It is a further object of the present invention to provide a better sight backward for a driver than the sight backward in many vehicles existing at the market, provided with belt rolls at the upper part of the B-pillar, in the present day situation.

It is still an additional object of the invention to provide commonality, e.g. to arrange the inventive arrangement in connection with common belt roll systems.

These objects are achieved in accordance with the present invention by means of the arrangement for relinking and clamping a seat belt in a vehicle as claimed in claim 1, wherein the load limiter comprises a wire being wired around a rod.

Preferably, a first end of the wire is attached to the vehicle, and the second end of the wire is attached to the rod being attached to the relinker. Alternatively, the first end of the wire is attached to the relinker, and the second end is attached to the rod being attached to the vehicle. More preferably, the wire is helically wired onto the rod.

Advantageously, the rod has a varying diameter along the length of the rod, for example the diameter increases along the length of the rod. Preferably, the diameter of the rod is conical along the length of the rod so that a degressive reaction force in the seatbelt is obtained in time during the accident. Naturally, the rod can be provided with a number of different diameters.

Correspondingly, the wire can be provided with a number of different diameters. Furthermore, the diameter of the wire can be varying along the length of the wire.

By means of the inventive arrangement, both the wire and the rod are deformed at a traffic accident. Preferably, both the wire and the rod are manufactured of metallic materials with appropriate coefficients of elasticity.

Preferably, the length of the wire is arranged to be extended at an unwiring of the wire from the rod. The rod is twisted around its own axis.

Alternatively, the rod is rotatably arranged. Then a type of locking means locks the rotation of the rod, whereupon the rod is free to rotate at unlocking of the locking means. In this case, the rod can be rotary arranged with an inherent force of inertia.

The relinker arrangement comprises at least one additional attachment between the relinker and the vehicle. In this case, the additional attachment is the first attachment between the relinker and the vehicle, and the load limiter is the second attachment between the relinker and the vehicle. Preferably, the first attachment is constituted of an attachment between a console for the relinker and the relinker itself, and/or an attachment between the console and the vehicle as well.

The relinker arrangement comprises a releasing mechanism for releasing the at least one additional connection between the relinker and the vehicle.

### BRIEF DESCRIPTION OF THE DRAWINGS

The invention will be described in the following by way of example only and with reference to the embodiments illustrated in the drawings, in which
- Fig. 1: is a perspective view illustrating a relinker arrangement for a seat belt in a vehicle,
- Fig. 2: is an enlarged perspective view of a first embodiment of the relinker arrangement of Fig. 1, and
- Fig. 3: is a detailed perspective view of still another embodiment of the relinker arrangement of Figs. 1 and 2.

### DETAILED DESCRIPTION OF PREFERRED EMBODIMENTS

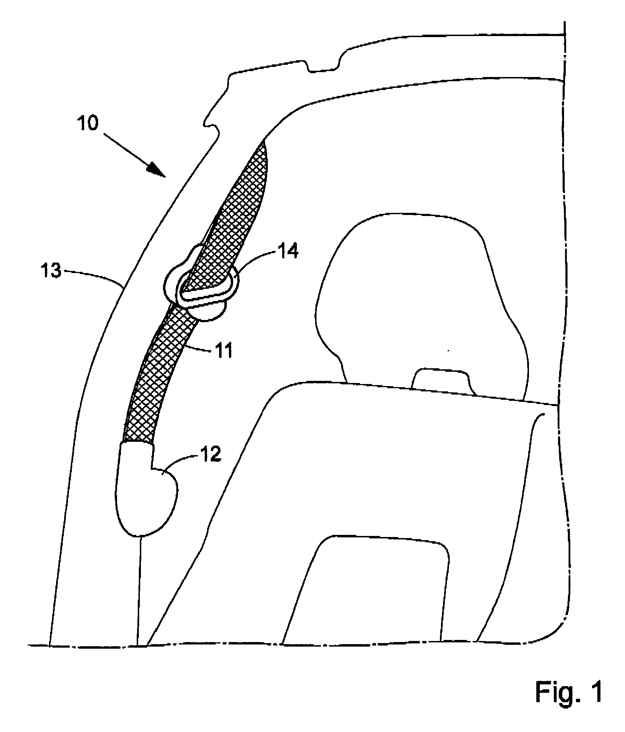

In the drawings, reference numeral 10 generally denotes a relinker arrangement for relinking and clamping a seat belt being arranged in connection with a belt roll in a vehicle, see Fig. 1.

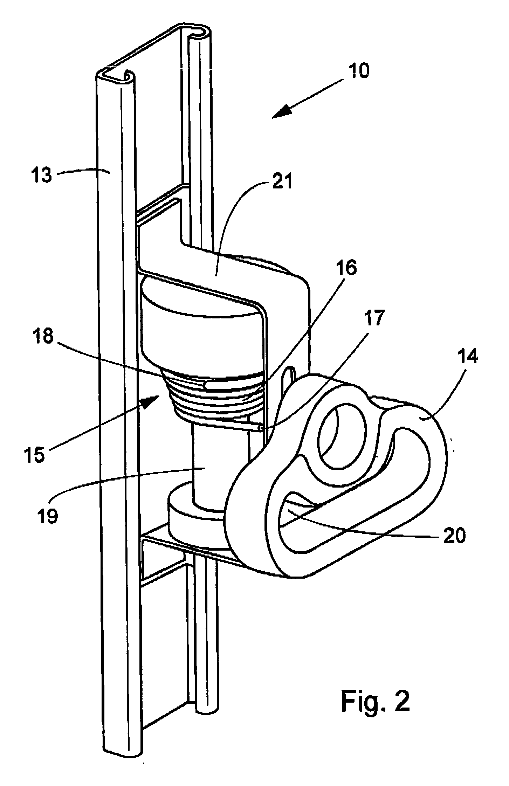

In a preferred embodiment of the invention, the relinker arrangement 10 mainly comprises a relinker 14 and a load limiter 15, see Fig. 2. Initially, a belt roll 12 for a seat belt 11 is arranged at the lower part of a B-pillar 13 of a vehicle. The seat belt 11 runs from the belt roll 12 upward in a substantially vertical direction along the B-pillar 13 toward the relinker 14 whereat the seat belt 11 is relinked through a hole 20 of the relinker 14 in a direction toward the user of the seat belt 11.

The relinker 14 is provided with a first and a second attachment to the B-pillar 13. The first attachment is constituted of an attachment between a console 21 for the relinker 14 and the relinker 14 itself, and/or an attachment between the console 21 and the B-pillar 13 as well. Preferably, the first attachment between the relinker 14 and the B-pillar 13 is releasable in an accidental situation, which is described in greater detail below. However, the relinker 14 and the attachments thereof can also be arranged to another part of the vehicle.

The second attachment between the relinker 14 and the B-pillar 13 is constituted of the load limiter 15. The load limiter 15 is constituted of a wire 16, a strip, a thread, a spring or the like, and the arrangement of the wire 16 between the relinker 14 and the B-pillar 13. In greater detail, the wire 16 has two ends 17, 18, of which a first end 17 is fixedly attached to the relinker 14, and a part of the wire 16 comprising a second end 18 is wired around a rod 19, a bar, a spindle, a shaft or the like. The second end 18 is fixedly attached at the surface of the rod 19. The rod 19 is in its turn mounted to the B-pillar 13. Preferably, the part of the wire 16 including the second end 18 of the wire 16 is helically wired around the rod 19, which preferably has a varying diameter along its length, for instance an increasing conical diameter.

In even greater detail, the wire 16 is manufactured of a metallic material with an appropriate coefficient of elasticity. Preferably, the wire 16 is plastically deformed at the relevant belt forces at the retardation in a traffic accident so that an extension of the length of the wire 16 is obtained. The rod 19 is manufactured of a metallic material with an appropriate coefficient of elasticity as well. Correspondingly, the rod 19 can be plastically deformed at the relevant belt forces at the accident.

In practise, when pulling the relinker 14 with a sufficiently great force, and if the second attachment is the only attachment between the relinker 14 and the B-pillar 13, the wire 16 is unwired from the rod 19 whereupon the length of the wire 16 is extended during the unwiring. The rod 19 is substantially simultaneously wired, i.e. twisted around its own axis by means of the plastic deformation during the unwiring of the wire 16.

Alternatively, the rod 19 can be rotary arranged with an inherent force of inertia at the unwiring of the wire 16. Then the rod 19 can be arranged with locking means for rotating at the unlocking thereof.

An energy absorbtion takes place in the described plastic deformation of the wire 16 and the rod 19, whereby the forces in the seat belt can be controlled and minimised.

Preferably, the unwiring of the wire 16 is enabled for the complete length of the wire 16 since a plastic deformation of the complete length leads to a maximum energy absorbtion of the wire 16, and thereby minimised belt forces. Alternatively, if the complete length of the wire 16 is utilised, a lesser energy absorbtion can be generated per length unit of the wire 16. In even greater detail, the maximum length of the wire 16 is dimensioned with respect to the available space for the seatbelt user to move in a forward direction in the compartment of the vehicle without hitting the windshield, the dashboard or a front seat.

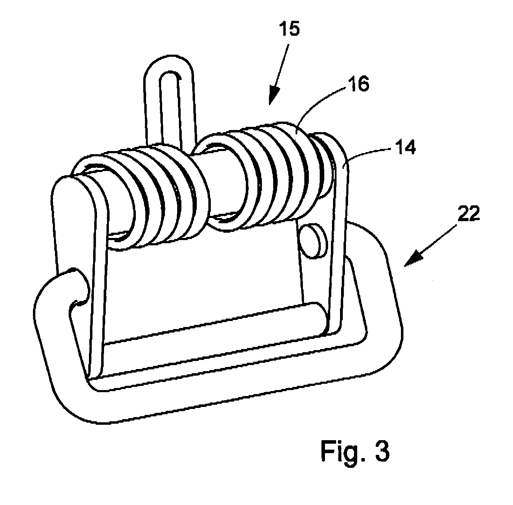

However, the wire 16 can be arranged in other ways between the relinker 14 and the vehicle in other embodiments of the invention. It is also possible for the first end 17 of the wire 16 to be fixedly attached to the vehicle, and a part of the wire 16 comprising the second end 18 can be wired around a rod 19 or the like, which in turn can be arranged into the relinker 14, see Fig. 3. In still an alternative embodiment, it is possible that both the ends 17, 18 of the wire 16 are arranged in other appropriate ways between the relinker 14 and the vehicle 13 so that a maximum energy absorbing capacity is obtained for the complete length of the wire 16 at the unwiring thereof from the rod 19. Obviously, in still other embodiments of the invention, a number of wires 16 can be arranged between the relinker 14 and the vehicle 13.

The relinker 14 also comprises a clamping mechanism 22, which can fixedly clamp the seat belt 11, see Fig. 3. The clamping mechanism is self-hemming and activated when the seat belt load exceeds a pre-set value. However, the clamping mechanism can also be activated by means of a pyrotechnical activation instead of the seat belt load. The constructive design of the clamping mechanism is not described hereinafter.

The relinker arrangement 10 further comprises a release mechanism (not shown) for releasing the relinker 14 from its first attachment to the B-pillar 13 as mentioned above.

Preferably, the release mechanism is constituted of a charge of powder. An additional preferred release mechanism can be the constructive design of the attachment to the B-pillar 13, i.e. so that the described first attachment has a lower strength than the second described attachment. In this way, the first attachment is designed to break before the load limiter 15 breaks. However, another possible release mechanism can be an electrical motor, which then releases the relinker 14 from the B-pillar 13.

The release mechanism is triggered and released by an incoming signal thereto. Preferably, the signal is sent from the pretensioner or the airbag unit at the release thereof. But the signal can also be sent from any software unit or component of the vehicle. The signal and its origin are not described hereinafter.

The inventive arrangement 10 operates according to the following. During the driving of the vehicle, the user of the seat belt 11 has buckled the seat belt buckle (not shown), which then is tensioned across his or hers torso, particularly around the chest by means of a spring arrangement (not shown).
During driving, the seat belt 11 is also clamped and locked by a web acceleration lock device (not shown) when the seat belt 11 is exposed for too high pull forces, for instance at braking of the vehicle or when violently pulling out the seat belt 11. Then the seat belt 11 cannot be pulled out of the belt roll 12 any further. Both the spring arrangement and the web lock arrangement are located in the belt roll 12. During this first operating condition, the relinker 14 is attached to the vehicle 13 by means of both the described first and second attachments.

Incidentally, a traffic accident unfortunately takes place. If the traffic accident is seriously enough, the pretensioner (not shown) is initially triggered. Then the seat belt 11 is automatically pulled into the belt roll 12, which is subsequently locked in a position so that the seat belt 11 cannot be pulled out any further, whereupon the seatbelt 11 is tightened around the seat belt user.

As mentioned above, the relinker 14 clamps the seat belt 11, when the seat belt forces exceed a pre-set value. A second operating condition for the relinker arrangement 10 is initiated when the relinker 14 clamps the seatbelt 11. Then or subsequently, the release mechanism releases the first described attachment between the relinker 14 and the B-pillar 13. ( The first attachment can either be the attachment between the relinker 14 and the console 21, or the attachment between the console 21 and the B-pillar 13.)
A consequence of the accident is a retardation of the vehicle speed at the ride down of the vehicle. The forces in the seatbelt 11 are great during the retardation, whereby the pretensioner gradually releases and unrolls the seat belt 11 out of the belt roll 12 as the seat belt user moves in a forward direction inside the vehicle. Since the relinker 14 is clamped into the seat belt 11, the relinker 14 aims to accompany the seat belt 11 when it is gradually released. Then the load limiter 15 is the only connection between the relinker 14 and the B-pillar 13. When the seat belt forces are sufficiently great, the wire 16 is unwired from the rod 19 during a plastic deformation of both the wire 16 and the rod 19 in the above-described way. Preferably, the seat occupant moves the maximum possible length in a forward direction in the compartment of the vehicle without hitting the dashboard, the windshield or a front seat, in spite of the extension of the length of the wire 16 in the plastic deformation thereof.

By means of the energy absorbing plastic deformation of the wire 16 and the rod 19 of the inventive arrangement 10, the forces in the seat belt 11 are controlled and minimised during a traffic accident.

Particularly, it is preferred that the belt forces don't exceed the maximum forces that a human chest can obtain during an accident.

If the traffic accident is not serious enough, whereby the pretensioner and the inventive arrangement 10 is not triggered but the seat belt can still be clamped by the regular web acceleration lock device due to high pull forces in the seat belt 11.

Preferably, the relinker arrangement 10 is arranged into a safety system, which is arranged to be released in connection with the initiation of the pretensioner or the release of the airbag of the vehicle at a traffic incident.

The invention has been described above and illustrated in the drawings by way of example only and the skilled person will recognise that various modifications may be made without departing from the scope of the invention as defined by the appended claims.

## Claims

1. A relinker arrangement (10) for relinking and clamping a seat belt (11) in a vehicle (13), the relinker arrangement (10) comprising a relinker (14) and a load limiter (15), wherein the load limiter (15) connects the relinker (14) to the vehicle (13), and that the load limiter (15) comprises a wire (16) being wired around a rod (19),
**characterised in that** a first end (17) of the wire (16) is attached to the vehicle (13), and the second end (18) of the wire (16) is attached to the rod (19), the rod (19) in turn attached to the relinker (14).

2. A relinker arrangement as claimed in claim 1,
**characterised in that** a first end (17) of the wire (16) is attached to the relinker (14), and a second end (18) of the wire (16) is attached to the rod (19), the rod (19) in turn attached to the vehicle (13).

3. A relinker arrangement as claimed in anyone of the preceding claims,
**characterised in that** the wire (16) is helically wired around the rod (19).

4. A relinker arrangement as claimed in anyone of the preceding claims,
**characterised in that** the diameter of the rod (19) is varying over the length of the rod.

5. A relinker arrangement as claimed in anyone of the preceding claims,
**characterised in that** diameter of the rod (19) is conical over the length of the rod.

6. A relinker arrangement as claimed in anyone of the preceding claims,
**characterised in that** the rod (19) is rotatably arranged.

7. A relinker arrangement as claimed in claim 6,
**characterised in that** a locking means locks the rod (19), whereupon the rod (19) is free to rotate at unlocking of the locking means.

8. A relinker arrangement as claimed in anyone of the claims 1 - 5,
**characterised in that** the rod (19) is arranged to be deformed at the unwiring of the wire (16) from the rod (19).

9. A relinker arrangement as claimed in anyone of the preceding claims,
**characterised in that** the arrangement (10) comprises at least one additional attachment (21) between the relinker (14) and the vehicle (13).

10. A relinker arrangement as claimed in claim 9,
**characterised in that** the arrangement (10) comprises a releasing mechanism for releasing the at least one additional attachment (21) between the relinker (14) and the vehicle (13).

## Patentansprüche

1. Umlenkanordnung (10) zum Umlenken und Festklemmen eines Sicherheitsgurtes (11) in einem Fahrzeug (13), wobei die Umlenkanordnung (10) einen Umlenker (14) und einen Lastbegrenzer (15) umfasst, wobei der Lastbegrenzer (15) den Umlenker (14) mit dem Fahrzeug (13) verbindet und der Lastbegrenzer (15) einen um einen Stab (19) gewickelten Draht (16) umfasst,
**dadurch gekennzeichnet, dass** ein erstes Ende (17) des Drahts (16) am Fahrzeug (13) befestigt ist und dass das zweite Ende (18) des Drahts (16) am Stab (19) befestigt ist, wobei der Stab (19) wiederum am Umlenker (14) befestigt ist.

2. Umlenkanordnung nach Anspruch 1, **dadurch gekennzeichnet, dass** ein erstes Ende (17) des Drahts (16) am Umlenker (14) befestigt ist und dass ein zweites Ende (18) des Drahts (16) am Stab (19) befestigt ist, wobei der Stab (19) wiederum am Fahrzeug (13) befestigt ist.

3. Umlenkanordnung nach einem der vorstehend aufgeführten Ansprüche, **dadurch gekennzeichnet, dass** der Draht (16) spiralförmig um den Stab (19) gewickelt ist.

4. Umlenkanordnung nach einem der vorstehend aufgeführten Ansprüche, **dadurch gekennzeichnet, dass** der Durchmesser des Stabs (19) über die Länge des Stabs variiert.

5. Umlenkanordnung nach einem der vorstehend aufgeführten Ansprüche, **dadurch gekennzeichnet, dass** der Durchmesser des Stabs (19) über die Länge des Stabs konisch ist.

6. Umlenkanordnung nach einem der vorstehend aufgeführten Ansprüche, **dadurch gekennzeichnet, dass** der Stab (19) drehbar vorgesehen ist.

7. Umlenkanordnung nach Anspruch 6, **dadurch gekennzeichnet, dass** ein Verriegelungsmittel den Stab (19) verriegelt, wobei sich der Stab (19) beim Entriegeln des Verriegelungsmittels frei drehen kann.

8. Umlenkanordnung nach einem der Ansprüche 1 bis 5, **dadurch gekennzeichnet, dass** der Stab (19) so vorgesehen ist, dass er sich beim Abwickeln des Drahts (16) vom Stab (19) verformt.

9. Umlenkanordnung nach einem der vorstehend aufgeführten Ansprüche, **dadurch gekennzeichnet, dass** die Anordnung (10) mindestens eine zusätzliche Befestigung (21) zwischen dem Umlenker (14) und dem Fahrzeug (13) umfasst.

10. Umlenkanordnung nach Anspruch 9, **dadurch gekennzeichnet, dass** die Anordnung (10) einen Freigabemechanismus zum Freigeben der mindestens einen zusätzlichen Befestigung (21) zwischen dem Umlenker (14) und dem Fahrzeug (13) umfasst.

## Revendications

1. Dispositif de renvoi de sangle (10) pour renvoyer et tendre une sangle de ceinture de sécurité (11) dans un véhicule (13), le dispositif de renvoi de sangle (10) comprenant un élément de renvoi de sangle (14) et un limiteur de charge (15), dans lequel le limiteur de charge (15) connecte l'élément de renvoi de sangle (14) au véhicule (13), et le limiteur de charge (15) comprend un fil (16) qui est enroulé autour d'une tige (19), **caractérisé en ce qu'**une première extrémité (17) du fil (16) est attachée au véhicule (13), et la deuxième extrémité (18) du fil (16) est attachée à la tige (19), la tige (19) étant à son tour attachée à l'élément de renvoi de sangle (14).

2. Dispositif de renvoi de sangle selon la revendication 1, **caractérisé en ce qu'**une première extrémité (17) du fil (16) est attachée à l'élément de renvoi de sangle (14), et une deuxième extrémité (18) du fil (16) est attachée à la tige (19), la tige (19) étant à son tour attachée au véhicule (13).

3. Dispositif de renvoi de sangle selon l'une quelconque des revendications précédentes, **caractérisé en ce que** le fil (16) est enroulé de façon hélicoïdale autour de la tige (19).

4. Dispositif de renvoi de sangle selon l'une quelconque des revendications précédentes, **caractérisé en ce que** le diamètre de la tige (19) varie le long de la longueur de la tige.

5. Dispositif de renvoi de sangle selon l'une quelconque des revendications précédentes, **caractérisé en ce que** le diamètre de la tige (19) est conique le long de la longueur de la tige.

6. Dispositif de renvoi de sangle selon l'une quelconque des revendications précédentes, **caractérisé en ce que** la tige (19) est agencée de façon rotative.

7. Dispositif de renvoi de sangle selon la revendication 6, **caractérisé en ce que** des moyens de verrouillage verrouillent la tige (19), la tige (19) étant libre de tourner une fois les moyens de verrouillage déverrouillés.

8. Dispositif de renvoi de sangle selon l'une quelconque des revendications 1 à 5, **caractérisé en ce que** la tige (19) est agencée de manière à être déformée lorsque le fil (16) est débobiné de la tige (19).

9. Dispositif de renvoi de sangle selon l'une quelconque des revendications précédentes, **caractérisé en ce que** le dispositif (10) comprend au moins une fixation supplémentaire (21) entre l'élément de renvoi de sangle (14) et le véhicule (13).

10. Dispositif de renvoi de sangle selon la revendication 9, **caractérisé en ce que** le dispositif (10) comprend un mécanisme de libération pour détacher ladite au moins une fixation supplémentaire (21) entre l'élément de renvoi de sangle (14) et le véhicule (13).
